(19) Europäisches Patentamt
European Patent Office
Office européen des brevets

(11) Numéro de publication: **0 078 722**
**A1**

(12) **DEMANDE DE BREVET EUROPEEN**

(21) Numéro de dépôt: **82401884.0**

(22) Date de dépôt: **13.10.82**

(51) Int. Cl.³: **H 02 M 3/155**

(30) Priorité: **14.10.81 FR 8119337**

(43) Date de publication de la demande: **11.05.83**
**Bulletin 83/19**

(84) Etats contractants désignés: **AT BE CH DE GB IT LI LU NL SE**

(71) Demandeur: **COMPAGNIE DE SIGNAUX ET D'ENTREPRISES ELECTRIQUES, 17, place Etienne-Pernet, F-75738 Paris Cedex 15 (FR)**

(72) Inventeur: **Deprez, Louis, 7, rue Mirabeau, F-91120 Palaiseau (FR)**
Inventeur: **Klein, Denys, 79, rue de Paris, F-91400 Orsay (FR)**

(74) Mandataire: **Chameroy, Claude et al, c/o Cabinet Malemont 42, avenue du Président Wilson, F-75116 Paris (FR)**

(54) **Dispositif d'alimentation électronique absorbant sur le réseau alternatif un courant sinusoidal phasé avec la tension.**

(57) Dispositif d'alimentation électronique comprenant un régulateur à découpage équipé d'un transistor hacheur fonctionnant à partir du réseau alternatif par l'intermédiaire d'un redresseur double alternance, ce régulateur étant commandé avec un rapport cyclique variable par un modulateur de façon à fonctionner tour à tour en élévateur et en abaisseur de tension, en vue d'absorber sur le réseau un courant pratiquement sinusoïdal phasé avec la tension.

Un tel dispositif est notamment utilisable pour l'alimentation des lampes à décharge destinées à l'élairage public.

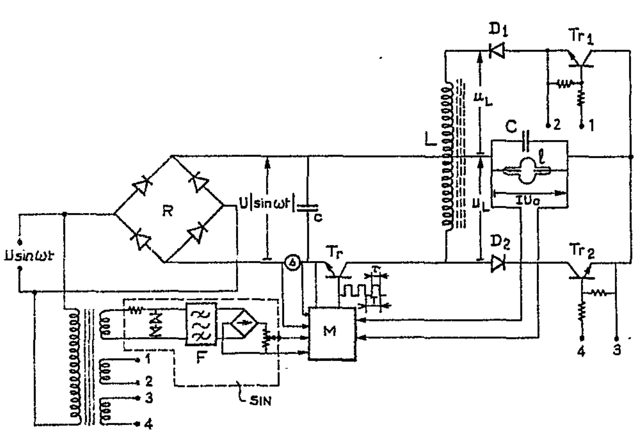


EP 0 078 722 A1

La présente invention concerne un dispositif d'alimentation électronique comprenant un régulateur à découpage équipé d'un transistor hacheur et alimenté à partir du réseau alternatif de distribution d'énergie par l'intermédiaire d'un circuit de redressement à double alternance, ce régulateur à découpage étant commandé avec un rapport cyclique variable par un modulateur.

La plupart des montages électroniques (téléviseurs, amplificateurs, ordinateurs, sources stabilisées, etc...) sont alimentés à partir du réseau par un redresseur double alternance suivi d'un filtre à condensateur en tête. Vu du réseau, ce montage est entaché d'un grave défaut : il n'absorbe de courant que sur les pointes de tension. La valeur efficace de ce courant est beaucoup plus élevée que le quotient de la puissance active $P_0$ par la tension efficace $U_{eff}$. Les lignes, interrupteurs, fusibles disposés en amont doivent alors être surcalibrés. Les harmoniques de courant donnent lieu à une chute inductive et à une chute résistive de la tension du réseau, en raison de l'impédance interne qu'il présente. Il en résulte une "pollution" du réseau, due à l'altération de la forme d'onde de la tension qu'il délivre, et qui peut être préjudiciable aux autres usagers. De plus, le condensateur placé en tête du filtre doit souvent être surdimensionné, d'une part en capacité pour stocker l'énergie nécessaire à la charge pendant la longue durée de non-conduction du redresseur, d'autre part en aptitude à supporter les importantes valeurs efficaces de l'intensité qui le traverse.

La présente invention a pour but de remédier aux défauts du redresseur suivi d'un filtre à condensateur en tête en modérant la valeur maximale du courant absorbé sur le réseau tout en augmentant sa durée. Pour ce faire, le dispositif selon l'invention comprend des moyens pour faire fonctionner le régulateur à découpage en abaisseur de tension lorsque la tension du réseau passe par des valeurs élevées, et en élévateur de tension lorsqu'elle passe par des valeurs faibles. La puissance instantanée p qu'il absorbe varie selon une loi du type $p = UI \sin^2 \omega t$, c'est-à-dire que le montage est vu du réseau comme une résistance absorbant un courant sinusoïdal et présentant un excellent facteur de puissance.

Dans une forme de réalisation particulière de l'invention, lesdits moyens comportent une inductance connectée entre l'un des pôles du circuit de redressement et la sortie du transistor hacheur, cette inductance assurant le stockage de l'énergie et son transfert vers la charge par l'intermédiaire d'une diode de récupération et d'un condensateur de filtrage, tandis qu'une consigne sinusoïdale est appliquée après redressement sur le modulateur de rapport cyclique et qu'un condensateur de faible capacité est branché en amont du transistor hacheur pour dériver les courants haute fréquence véhiculés par ce transistor.

Grâce à cette disposition, on obtient un facteur de puissance proche de l'unité avec un faible taux de distorsion du courant absorbé et, partant, de la tension du réseau. De plus, il est facile de doser la puissance, le courant et la tension délivrés à la charge en modifiant à cette fin la consigne du modulateur.

Plusieurs formes d'exécution de l'invention sont décrites ci-après à titre d'exemples, en référence aux dessins annexés dans lesquels :

- la figure 1 est un schéma d'un dispositif d'alimentation conforme à l'invention, avec filtre à condensateur en parallèle sur l'utilisation,
- la figure 2 est un schéma d'une application du dispositif selon l'invention pour l'alimentation à polarité alternée d'une lampe à décharge,
- la figure 3 est un schéma d'une autre application du dispositif selon l'invention pour la charge progressive de condensateurs de forte capacité.

Le dispositif représenté sur la figure 1 comprend tout d'abord un circuit de redressement à double alternance constitué ici par un pont de diodes R, qui est connecté au réseau alternatif de distribution d'énergie figuré par la tension $U \sin \omega t$. En aval du redresseur se trouvent branchés en série une inductance L de stockage d'énergie et un transistor hacheur Tr commandé en tout ou rien par un modulateur M de rapport cyclique $\frac{\tau}{T}$. En parallèle sur l'inductance L sont branchés en série une diode rapide D et la charge constituée par le condensateur de filtrage C et le circuit d'utilisation Z connectés en parallèle. Un capteur de courant s est inséré sur le trajet du courant de charge. La tension qu'il offre à ses bornes est appliquée sur le modulateur M, au même titre que la tension $U|\sin \omega t|$, élaborée à partir du réseau par l'intermédiaire d'un transformateur et d'un circuit de redressement, et que la tension $U_o$ aux bornes de la charge. Un condensateur c de petite capacité, branché en amont du transistor hacheur Tr, absorbe la composante haute fréquence du courant véhiculé par ce transistor.

Le dispositif qui vient d'être décrit fonctionne de la manière suivante :

A chaque conduction du transistor hacheur Tr l'inductance L est soumise à une tension presque égale à $U|\sin \omega t|$. Elle reçoit donc un courant $\frac{1}{L}\int U\, |\sin \omega t|\, dt$. Lorsque le transistor Tr est rendu isolant, ce courant ne peut trouver d'itinéraire que par la diode D. Comme il rencontre une contre-tension pratiquement égale à $U_o$, il évolue selon la loi $-\frac{1}{L}\int U_o\, dt$. En appelant $t_1$ l'instant de début de conduction et $\tau$ la durée de conduction, l'augmentation de courant se chiffre donc par $\frac{1}{L}\int_{t_1}^{t_1+\tau} U \sin \omega t\, dt$

Elle est suivie d'une diminution qui, s'étendant sur la durée $T - \tau$, atteint la valeur $-\frac{1}{L}\int_{t_1+\tau}^{t_1+T} U_0 \, dt$. Sur une période T complète, la variation de l'intensité atteint :

$$I(t_1 + T) - I(t_1) = \frac{1}{L}\left[\int_{t_1}^{t_1+\tau} U \sin\omega t \, dt - \int_{t_1+\tau}^{t_1+T} U_0 \, dt\right]$$

cependant que sa valeur moyenne, définie à une constante près, dépend des conditions initiales.

La durée $\tau$ de conduction du transistor est déterminée par le modulateur M en vue d'obtenir que l'intensité moyenne débitée par le réseau soit proportionnelle à la valeur absolue $|\sin\omega t|$ sur le même intervalle de temps T :

$$\frac{1}{T}\int_{t_1}^{t_1+\tau} i\,dt = k\,|\sin\omega t_1|$$

Les informations nécessaires au pilotage du modulateur proviennent de la prise de tension de sortie $U_0$, du capteur s de mesure du courant délivré i et de la tension redressée double alternance $U\,|\sin\omega t|$. Elles sont traitées non seulement en vue de définir la durée $\tau$ de conduction selon la formule théorique :

$$\frac{\tau}{T} = \frac{U_0}{U_0 + U\,|\sin\omega t|}$$

mais aussi pour corriger cette durée afin de tenir compte des chutes de tension non prises en considération dans le calcul, et pour hiérarchiser les différents signaux de consigne en vue d'éviter tout dépassement de tension, de courant ou de puissance qui pourrait nuire à la charge.

Dans une application de l'invention représentée sur la figure 2, on alimente une lampe à décharge $\ell$ en polarité alternée au moyen du pont de diodes R et du transistor hacheur Tr dont le rôle a déjà été explicité précédemment. L'inductance L est munie cette fois d'une prise médiane telle que la tension $+ u_L$ soit disponible sur la borne supérieure en même temps que la tension $- u_L$ est disponible sur la borne inférieure. La lampe $\ell$, dont une des bornes est reliée en permanence à la prise médiane, a son autre borne connectée tour à tour à chacune des extrémités de l'enroulement, au rythme d'une inversion dont la fréquence peut ou non être celle du réseau. Cette inversion est exercée par la mise en conduction d'un transistor $Tr_1$ et d'une diode $D_1$ en alternance avec celle d'un transistor $Tr_2$ et d'une diode $D_2$. Dans une forme d'exécution très simple de l'invention, les circuits d'attaque de base des transistors $Tr_1$ et

$Tr_2$ sont constitués par deux enroulements d'un même transformateur dont la tension primaire peut être celle du réseau. Entre la prise médiane de l'inductance L et le point commun des transistors $Tr_1$ et $Tr_2$ est connecté un condensateur C de filtrage dont le rôle est de dériver la composante de haute fréquence du courant délivré par l'inductance L pour que seule la composante de basse fréquence traverse la lampe $\ell$.

Le dispositif selon l'invention est complété par un circuit d'asservissement agissant sur le modulateur M. Recevant à la fois la tension aux bornes de la lampe et l'information sur le courant délivrée par le capteur s, il détermine à tout moment le rapport cyclique $\frac{\tau}{T}$ pour que le courant absorbé sur le réseau, une fois débarrassé de sa composante de haute fréquence par le condensateur c, soit proportionnel à $\sin \omega t$.

A cet effet, le modulateur M reçoit une consigne sinusoïdale phasée avec le secteur et stable en amplitude, engendrée par un circuit SIN connu en soi, constitué essentiellement d'un écrêteur à deux diodes montées tête-bêche suivi d'un filtre passe bande F accordé sur la fréquence du réseau et d'un redresseur double alternance comprenant deux diodes associées à un amplificateur opérationnel. La sinusoïde redressée engendrée par le circuit SIN est d'amplitude stable, et sa forme d'onde n'est pas altérée par la distorsion qui affecte éventuellement la tension du réseau. Elle est à chaque instant comparée avec le signal issu du capteur de courant s. En cas d'inégalité, la différence est amplifiée pour corriger en conséquence le rapport cyclique $\frac{\tau}{T}$. Au cours d'une même alternance, ce rapport passe d'une valeur très proche de 1, qui fait fonctionner le montage en élévateur selon la loi théorique :

$$\frac{\tau}{T} = \frac{U_0}{U_0 + U\,|\sin \omega t|}$$

à une valeur inférieure à $\frac{1}{2}$ qui le fait fonctionner en abaisseur de tension, pour revenir avant la fin de l'alternance au fonctionnement en élévateur.

L'inductance L a donc en définitive deux fonctions distinctes, à savoir le stockage d'énergie pendant la période de conduction du transistor hacheur Tr suivi d'une restitution pendant la période d'isolement, et l'alimentation de la lampe en polarité alternée qui évite la cataphorèse des électrodes. Il est à noter que les diodes $D_1$ et $D_2$ protègent les transistors $Tr_1$ et $Tr_2$ du sélecteur de polarité contre les tensions négatives qui apparaissent nécessairement sur l'inductance L.

Pour doser le flux lumineux émis par la lampe à décharge $\ell$, il suffit d'agir sur le niveau de sortie de la consigne sinusoïdale engendrée par le circuit SIN au moyen par exemple d'un potentiomètre p. Ce dosage peut être bien entendu commandé soit manuellement, soit par l'intermédiaire d'un moyen de télé-

réglage approprié de type connu.

On notera que ce dispositif d'alimentation remplace avantageusement les ballasts inductifs lourds et encombrants qui sont associés habituellement aux lampes à décharge, et qui absorbent un courant excessif en raison du mauvais facteur de puissance qu'ils présentent. L'inductance à prise médiane du montage objet de l'invention est beaucoup plus compacte qu'un ballast habituel du fait qu'elle travaille avec des périodes T beaucoup plus courtes (typiquement 40 microsecondes) que la période des réseaux de distribution en alternatif. Le gain d'encombrement ainsi obtenu permet de loger aisément les diodes, les transistors et les autres éléments du montage de l'invention.

Par rapport aux autres alimentations électroniques pour lampes à décharge, souvent appelées "ballast à état solide" et fonctionnant avec un transistor hacheur et une inductance montés constamment en abaisseur de tension, le schéma de l'invention offre l'avantage de maintenir l'alimentation de la lampe même quand la tension du réseau passe par des valeurs faibles, ce qui évite le risque d'extinction habituellement rencontré en fin d'alternance.

Une autre application de l'invention, représentée sur la figure 3, concerne la charge progressive de condensateurs C de forte capacité. On fait de plus en plus appel à de tels condensateurs pour emmagasiner de l'énergie électrique, en raison de leur aptitude à la libérer très rapidement, par exemple dans des radars, des lasers ou des tubes à éclats de type flash. La difficulté habituellement rencontrée dans le stockage d'énergie au moyen de ces condensateurs vient de ce que, partant d'un réseau monophasé dont la tension typique est 220 volts, il faille les charger jusqu'à des tensions élevées, dépassant souvent le kilovolt, en évitant les régimes discontinus, les commutateurs mécaniques, les transformateurs à prises, les rhéostats de charge et plus généralement tout dispositif électromécanique sujet à usure.

Pour surmonter aisément cette difficulté, le montage de la figure 3 comprend tout d'abord un pont de redresseurs R, un transistor hacheur Tr, une inductance L, une diode de récupération D, un générateur de sinusoïde pilote SIN et un capteur de courant s dont le fonctionnement a déjà été décrit plus haut. La batterie de condensateurs C est soumise à une tension constamment croissante, selon une loi parabolique de type $U_0 = k \sqrt{t}$, grâce au fait que le courant débité par le réseau est constamment proportionnel à sa tension. Le montage fonctionne au départ en abaisseur, puis tour à tour en élévateur et abaisseur au rythme d'une fréquence double de celle du réseau, et enfin en élévateur seulement, une fois que la tension des condensateurs a été amenée à une valeur supérieure à la tension de crête U du réseau.

Un dispositif à seuil S, attaqué par la tension $U_0$, vient inhiber le

fonctionnement du transistor hacheur Tr lorsque la charge est terminée, pour que ni les condensateurs C ni la diode D n'aient à souffrir d'une tension qui pourraît à la longue devenir excessive.

REVENDICATIONS

1. Dispositif d'alimentation électronique comprenant un régulateur à découpage équipé d'un transistor hacheur (Tr) et alimenté à partir du réseau alternatif de distribution d'énergie par l'intermédiaire d'un circuit de redressement (R) à double alternance, ce régulateur à découpage étant commandé avec un rapport cyclique variable par un modulateur (M), caractérisé en ce qu'il comprend en outre des moyens pour faire fonctionner le régulateur à découpage tour à tour en élévateur et en abaisseur de tension à un rythme double de celui de la fréquence du réseau, de façon à lui faire absorber sur le réseau un courant pratiquement sinusoïdal phasé avec la tension.

2. Dispositif d'alimentation selon la revendication 1, caractérisé en ce que lesdits moyens comportent une inductance (L) connectée entre l'un des pôles du circuit de redressement (R) et la sortie du transistor hacheur (Tr), cette inductance (L) assurant le stockage de l'énergie et son transfert vers la charge par l'intermédiaire d'une diode de récupération (D) et d'un condensateur de filtrage (C), tandis qu'une consigne sinusoïdale (SIN) est appliquée après redressement sur le modulateur de rapport cyclique (M) et qu'un condensateur (c) de faible capacité est branché en amont du transistor hacheur (Tr) pour dériver les courants de haute fréquence véhiculés par ce transistor.

3. Dispositif d'alimentation selon la revendication 2, pour l'alimentation en courant alternatif d'une lampe à décharge (ℓ), caractérisé en ce que l'inductance de stockage (L) comporte une prise médiane de façon à alimenter la lampe à décharge en polarité alternée par l'intermédiaire de deux circuits à diodes ($D_1$, $D_2$) et transistors ($Tr_1$, $Tr_2$).

4. Dispositif d'alimentation selon la revendication 2, pour la charge d'une batterie de condensateurs (C), caractérisé en ce qu'il comprend un dispositif à seuil (S) inhibant le fonctionnement du transistor hacheur (Tr), pour interrompre la montée en tension desdits condensateurs.

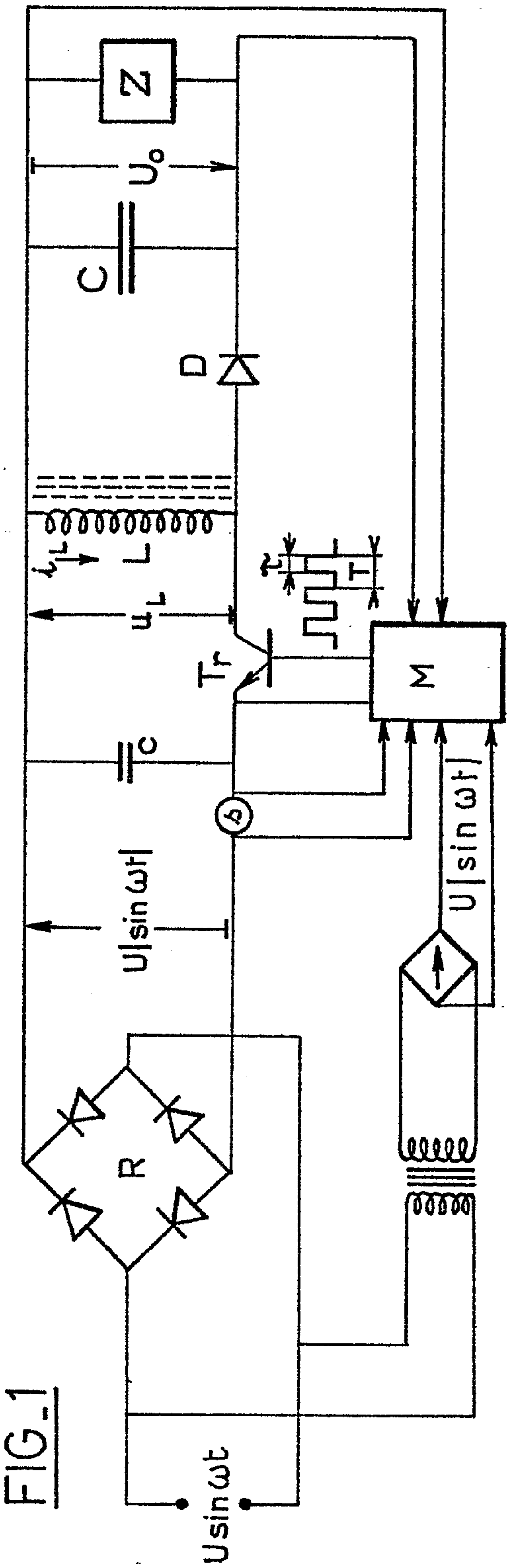
Z
Uo
C
D
L
iL
uL
T
τ
Tr
M
c
b
U|sin ωt|
Usin ωt

FIG_1

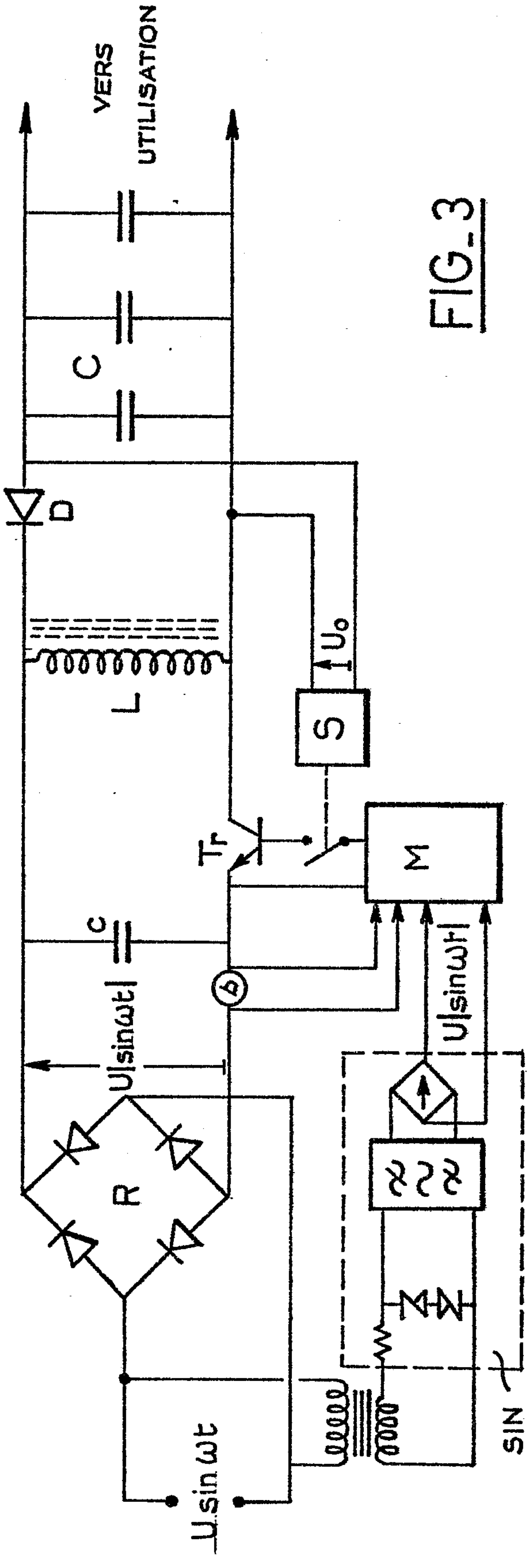
VERS UTILISATION
C
D
L
Uo
S
Tr
M
c
b
U|sin ωt|
U.sin ωt
SIN

FIG_3

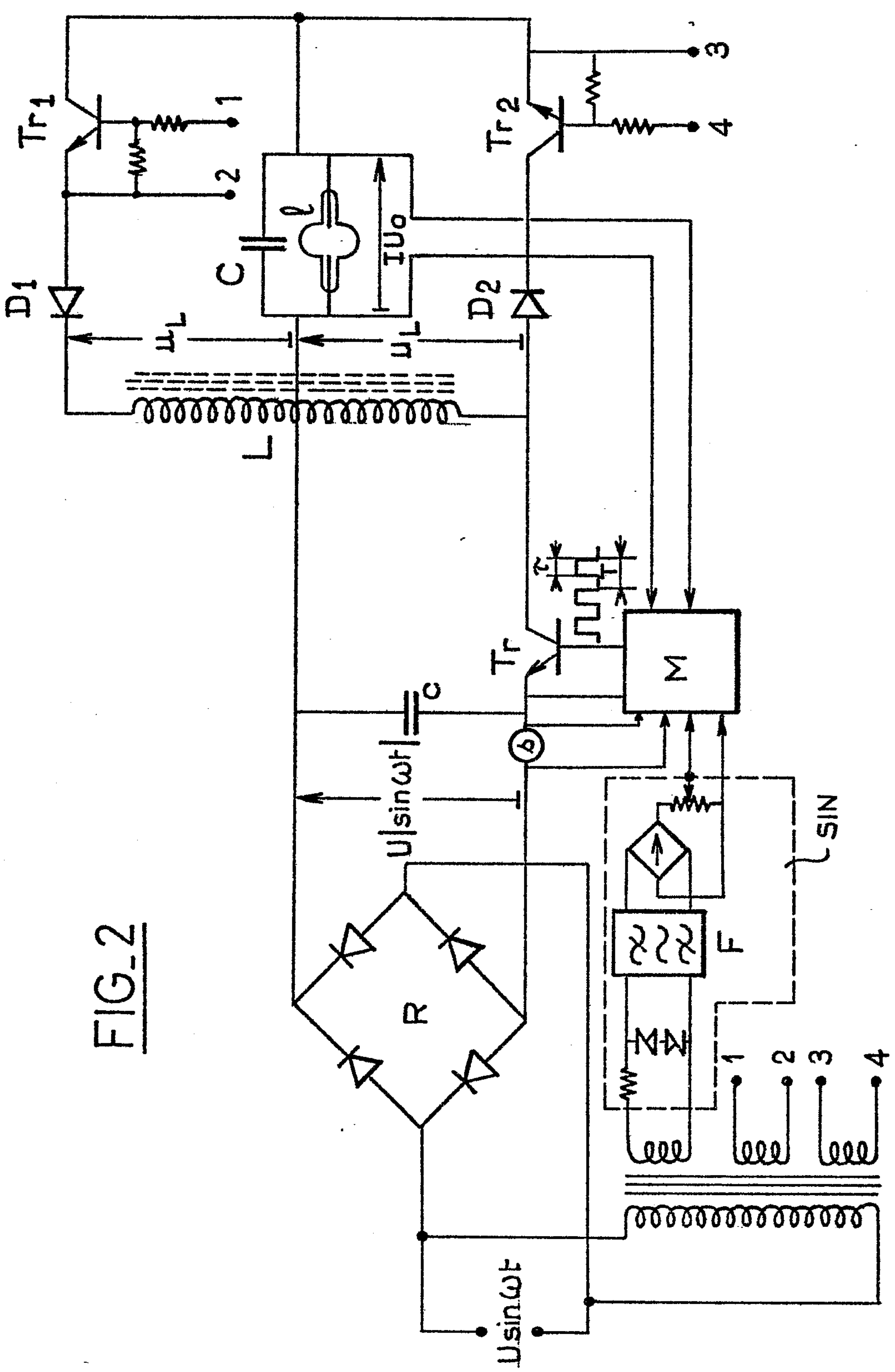


FIG_2

Office européen des brevets

**RAPPORT DE RECHERCHE EUROPEENNE**

0078722

Numéro de la demande

EP 82 40 1884

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-4 251 752 (STOLZ) *Colonne 3, ligne 51 - colonne 13, ligne 60* | 1 | H 02 M 3/155 |
| A | ELECTRONIQUE ET APPLICATIONS INDUSTRIELLES, no. 268, 1 mai 1979, pages 24-31, Paris (FR); G.GUILLAUME: "Régulateurs à découpage en modes abaisseur, élévateur ou inverseur". *Page 30, colonne de droite, lignes 7-37; figure 6* | 1 | |
| A | FR-A-2 416 617 (CREMER) | 1 | |
| P,X | GB-A-2 095 930 (CARLILE RICHMOND STEVENS) *Page 2, ligne 29 - page 3, ligne 105* | 1 | DOMAINES TECHNIQUES RECHERCHES (Int. Cl. 3) |
| | ----- | | H 02 M 3/00<br>H 02 P 13/00<br>H 05 B 41/00<br>G 05 F 1/00 |

Le présent rapport de recherche a été établi pour toutes les revendications

| Lieu de la recherche | Date d'achèvement de la recherche | Examinateur |
|---|---|---|
| LA HAYE | 20-01-1983 | BERTIN M.H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82